# EUROPÄISCHE PATENTANMELDUNG

(11) **EP 4 825 511 A1**
(43) Veröffentlichungstag der Anmeldung: **21.10.2026**
(21) Anmeldenummer: 26156874.5
(22) Anmeldetag: 06.02.2026
(51) Int. Cl.: B23B 51/02

(54) **SPIRALBOHRER**

(30) Priorität: 16.04.2025 DE 102025114937
(71) Anmelder: Gühring KG, 72458 Albstadt (DE)
(72) Erfinder: Rothenaicher, Stefan, 87746 Erkheim (DE)
(74) Vertreter: Winter, Brandl - Partnerschaft mbB

(57) **Zusammenfassung**

Spiralbohrer (1) mit einem Schaft (2) und einem Schneidteil (3), der wenigstens zwei Stege aufweist, die in Umfangsrichtung des Spiralbohrers (1) durch Hauptspannuten (5) voneinander getrennt sind und jeweils in Umfangsrichtung des Spiralbohrers (1) durch eine entlang des Stegs verlaufende Nebenspannut (6) in einen Vorlaufsteg (10) und einen Nachlaufsteg (20) geteilt sind, die jeweils eine Nebenschneide (12, 22) aufweisen. Je Steg endet der Nachlaufsteg (20) in Richtung des Schafts (2) vor dem Vorlaufsteg (10) und mündet die Nebenspannut (6) in eine nachlaufende Hauptspannut (5).

## Beschreibung

Die Erfindung betrifft einen Spiralbohrer zum Bohren ins Volle nach dem Oberbegriff des Anspruchs 1.

Derartige Spiralbohrer sind in vielfacher Gestalt im Einsatz. Sie erstrecken sich entlang einer Längsmittelachse und weisen einen Schaft sowie einen Schneidteil auf. Üblicherweise hat der Schneidteil wenigstens zwei Schneidstege oder Stege, die jeweils einen Schneidkeil mit einer Hauptschneide bilden. Die Hauptschneide des Schneidkeils wird dabei aus Schnittlinie einer Spanfläche, über die der Span in eine sich entlang des Spiralbohrers unter einem Drallwinkel wendelförmig verlaufende Hauptspannut abläuft, und einer Freifläche gebildet. Herkömmlich sind die Hauptschneiden unter einem Spitzenwinkel von deutlich kleiner als 180° zueinander angeordnet, um für eine gute Zentrierung des Spiralbohrers im Werkstück zu sorgen. Die Hauptschneide verläuft radial nach außen bis zu einer Schneidenecke, wo sie in eine für die Nachbearbeitung der Bohrung vorgesehene Nebenschneide übergeht, an die in Umfangsrichtung eine Führungsfase und eine Freifläche anschließt. Im Bereich der Bohrermitte sind die Hauptschneiden über eine Querschneide miteinander verbunden. Eine Ausspitzung kann die Querschneide verkleinern, um den Spiralbohrer besser zu zentrieren und insbesondere das Anbohren beim Bohren ins Volle zu erleichtern.

Es ist des Weiteren bekannt, dass die Stege eine zweite, der (ersten) Nebenschneide in Drehrichtung des Spiralbohrers nachlaufende, Nebenschneide aufweisen, an die in Umfangsrichtung wiederum eine Führungsfase und eine Freifläche anschließt. Diese zweite Nebenschneide kann auf demselben Durchmesser wie die erste Nebenschneide liegen und für eine weitere Nachbearbeitung der Bohrungswand sorgen. Der zweiten Nebenschneide in Drehrichtung vorauslaufend weisen die Stege jeweils eine Nebenspannut auf, die sich entlang des Stegs erstreckt über die von der zweiten Nebenschneide abgetragene Späne abgeführt werden können.

Aus der Druckschrift DE 33 25 149 A1 ist ein zweischneidiger Spiralbohrer mit einem Schaft und einem Schneidteil bekannt, der zwei durch wendelförmig verlaufende Hauptspannuten voneinander getrennte Stege aufweist. Jeder Steg bildet an einem in Vorschubrichtung des Spiralbohrers vorderen Ende eine Hauptschneide aus. Die unter einem Spitzenwinkel verlaufenden Hauptschneiden sind durch eine Querschneide verbunden und durch Ausspitzungen korrigiert, die gleichzeitig die Querschneide verkürzen und dadurch für ein gutes Zentrierverhalten sorgen. Jede Hauptschneide verläuft radial nach außen bis zu einer Schneidenecke, wo sie in eine Nebenschneide übergeht, die sich wendelförmig entlang einer Hauptspannut bis zu einem Schaft erstreckt. Zusätzlich zu der Nebenschneide weist jeder Steg eine der Nebenschneide nachlaufende Zusatz-Nebenschneide auf, die auf demselben Durchmesser wie die Nebenschneide liegt und bis zum Schaft des Spiralbohrers verläuft. Eine entlang des Stegs zwischen den Nebenschneiden verlaufende Nebenspannut definiert mit ihrer Spanfläche die Zusatz-Nebenschneide und führt von der Zusatz-Nebenschneide abgetragene Späne in Richtung Schaft ab.

Mit dem in der DE 33 25 149 A1 beschriebenen Spiralbohrer können in einem Arbeitsgang Bohrungen mit hoher Oberflächengüte hergestellt werden. Hierzu tragen insbesondere die Zusatz-Nebenschneiden bei, die die von den Hauptschneiden und Nebenschneiden ausgebildete bzw. nachbearbeitete Bohrung weiter glätten, so dass eine separate Nachbearbeitung der Bohrung entweder ganz entfallen oder die Zeit für die Nachbearbeitung signifikant reduziert werden kann.

Ein Nachteil des Spiralbohrers der DE 33 25 149 A1 ist, dass sich aufgrund der Zusatz-Nebenschneiden, die sich über die gesamte Länge des Schneidteils bis zum Schaft erstrecken, im Bereich der entlang der Stege gebildeten Nebenspannuten Fließspäne oder Wickelspäne bilden können, die den Bohrvorgang behindern oder mit der Bohrungswand verklemmen können, so dass der Bohrvorgang zum Entfernen der Späne unterbrochen werden muss und sich die Bearbeitungszeit erhöht.

Der Erfindung liegt ausgehend von dem in der DE 33 25 149 A1 beschriebenen Spiralbohrer daher die Aufgabe zugrunde, einen Spiralbohrer bereitzustellen, der in der Lage ist, Bohrungen mit einer hohen Oberflächenqualität herzustellen und gleichzeitig die Bildung von Fließspänen oder Wickelspänen vermeidet.

Diese Aufgabe kann durch einen Spiralbohrer mit den Merkmalen des Anspruchs 1 gelöst werden. Die Unteransprüche betreffen vorteilhafte Ausgestaltungen.

Der Spiralbohrer weist einen Schaft und einen Schneidteil auf, der wenigstens zwei Stege aufweist, die in Umfangsrichtung des Spiralbohrers durch Hauptspannuten voneinander getrennt sind und jeweils in Umfangsrichtung des Spiralbohrers durch eine entlang des Stegs verlaufende Nebenspannut in einen Vorlaufsteg und einen Nachlaufsteg geteilt sind, die jeweils eine Nebenschneide aufweisen. Je Steg kann der Nachlaufsteg in Richtung des Schafts vor dem Vorlaufsteg enden und die Nebenspannut in eine nachlaufende Hauptspannut münden. Folglich erstreckt sich die Hauptspannut in einem axial hinter dem Nachlaufsteg liegenden Bereich, d.h. axial hinter dem Auslauf der Nebenspannut, in Umfangsrichtung des Spiralbohrers bis zu einem Rücken des vorauslaufenden Vorlaufstegs.

Die Stege des Schneidteils können an einem in Vorschubrichtung des Spiralbohrers vorderen Ende jeweils eine Hauptschneide bilden, die den Hauptteil der Zerspanungsarbeit des Spiralbohrers leisten. Die Hauptschneiden können durch eine Spanfläche der Hauptspannut definiert sein und über eine oder mehrere Querschneiden miteinander verbunden sein. Die Hauptspannten dienen insbesondere der Spanabfuhr der durch die Hauptschneiden abgetragenen Späne.

Der Spiralbohrer kann im Bereich des Bohrerkerns eine Zentrierspitze aufweisen, die das Zentrieren des Spiralbohrers im Werkstück erleichtert. Des Weiteren kann der Verlauf der Hauptschneide durch eine Ausspitzung korrigiert sein. Insbesondere kann die Querschneide oder können die Querschneiden durch die Ausspitzung verkürzt sein, wodurch das Zentrierverhalten des Spiralbohrers weiter verbessert wird. Ein zwischen den Hauptschneiden gebildeter Spitzenwinkel kann über die Länge der Hauptschneiden konstant sein oder variieren.

Jede Hauptschneide kann radial nach außen bis zu einer Schneidenecke verlaufen, wo sie in eine am Vorlaufsteg ausgebildete Nebenschneide übergeht. Die Schneidenecke kann je nach zu bearbeitendem Material durch einen oder mehrere Anschliffe verrundet sein, so dass der Verlauf der Hauptschneide und/oder der Verlauf der Nebenschneide im Bereich der Schneidenecke korrigiert ist. An jede Nebenschneide kann in gewohnter Weise eine Führungsfase anschließen. Die Nebenschneide des Vorlaufstegs, die auch als Vorlaufnebenschneide bezeichnet werden kann, die Nebenschneide des Nachlaufstegs, die auch als Nachlaufnebenschneide bezeichnet werden kann, und die Führungsfasen unterstützen die Zentrierung des Spiralbohrers im Bohrloch und bearbeiten zusätzlich die Seitenflächen des Bohrlochs nach. Von der Vorlaufnebenschneide abgetragene Späne werden über die der Vorlaufnebenschneide vorauslaufende Hauptspannut in Richtung des Schafts abgeführt und von der Nachlaufnebenschneide abgetragene Späne werden über die Nebenspannut, die den Steg in Umfangsrichtung des Spiralbohrers in Vorlaufsteg und Nachlaufsteg teilt, in Richtung des Schafts abgeführt. Die Nachlaufnebenschneide kann die Führung des Spiralbohrers weiter erhöhen und die auf die Schneiden wirkenden Lasten besser verteilen. Der Spiralbohrer neigt weniger zum Verlaufen, wodurch die Spanabfuhr und Oberflächengüte weiter verbessert werden kann.

Je Steg kann der Nachlaufsteg in Richtung des Schafts vor dem Vorlaufsteg enden und die Nebenspannut in eine nachlaufende Hauptspannut münden. Durch diese Ausgestaltung wird im Vergleich zu einem Spiralbohrer, bei dem sich der Nachlaufsteg wie der Vorlaufsteg über die gesamte axiale Länge des Schneidteils bis zum Schaft erstreckt, erreicht, dass die am Nachlaufsteg ausgebildete Nebenschneide in Richtung ihrer Erstreckung kürzer ist. Die Bildung relativ langer Fließspäne oder Wickelspäne, die den Bohrvorgang behindern oder mit der Bohrungswand verklemmen können, durch die Nachlaufnebenschneide kann dadurch verhindert werden. Späne, die von der Nachlaufnebenschneide von der Bohrungswand abgetragen werden, können über die in die nachlaufende Hauptspannut mündende Nebenspannut in die nachlaufende Hauptspannut überführt und über die nachlaufende Hauptspannut schließlich sicher und zuverlässig in Richtung des Schafts abtransportiert werden.

In einer weiteren Ausführungsform weisen die Nebenschneiden jeweils einen positiven Rückspanwinkel, vorzugsweise einen positiven Rückspanwinkel von mind. 15°, auf.

Der Rückspanwinkel der Nebenschneiden wird als ein Winkel bezeichnet, der in einem Radialschnitt bzw. einem senkrecht zur Drehachse des Spiralbohrers betrachteten Schnitt des Spiralbohrers zwischen einer die Nebenschneide definierenden Spanfläche, d.h. einer Spanfläche der Hauptspannut bzw. einer Spanfläche der Nebenspannut, und einer in diesem Schnitt zur Bearbeitungsfläche senkrecht stehenden und durch die Drehachse laufenden Werkzeugsbezugsebene gebildet wird. Ein positiver Rückspanwinkel sorgt im Vergleich zu einem Rückspanwinkel von 0° oder einem negativem Rückspanwinkel für einen kleineren Keilwinkel der Nebenschneide, wodurch die Zentrierung des Spiralbohrers verbessert wird und das zu bohrende Material geschnitten und nicht geschabt wird.

Der Rückspanwinkel der Nebenschneiden kann je nach zu bearbeitendem Material, Anforderungen an die zu erzielende Oberflächengüte und gewünschter Stabilität der Nebenschneiden jedoch auch 0° oder negativ sein.

Je Steg kann die Länge der Nachlaufnebenschneide 5 % bis 10 % der Länge der Vorlaufnebenschneide betragen.

Wenn die in der jeweiligen Erstreckungsrichtung gemessene Länge der Nachlaufnebenschneide 5 % bis 10 % der Länge der Vorlaufnebenschneide beträgt, wird einerseits erreicht, dass die Nachlaufnebenschneide eine ausreichende Nachbearbeitung der Bohrungswand zur Erzielung einer hohen Oberflächengüte durchführen kann sowie die Stabilität des Spiralbohrers erhöht wird. Anderseits kann verhindert werden, dass beim Bohrvorgang durch die Nachlaufnebenschneide lange Fließspäne oder Wickelspäne produziert werden, die den Bohrvorgang behindern oder mit der Bohrungswand verklemmen können und zu einer Unterbrechung des Bohrvorgangs führen. Die von der Nachlaufnebenschneide abgetragenen Späne können über die in die nachlaufende Hauptspannut mündende Nebenspannut in die nachlaufende Hauptspannut überführt und über die nachlaufende Hauptspannut schließlich sicher und zuverlässig in Richtung des Schafts abtransportiert werden.

In einer weiteren Ausführungsform können je Steg die Vorlaufnebenschneide und die Nachlaufnebenschneide parallel zueinander verlaufen.

Die Parallelität der Nebenschneiden jedes Schneidstegs verbessert die Führung des Spiralbohrers im Bohrloch, wodurch ein Verlaufen oder Wandern des Bohrers vermindert werden kann.

Je Steg können die Vorlaufnebenschneide und die Nachlaufnebenschneide auf demselben Durchmesser liegen.

Wenn die Vorlaufnebenschneide und die Nachlaufnebenschneide auf demselben Durchmesser liegen, können die auf die Nebenschneiden wirkenden Schnittkräfte besser verteilt werden. Insgesamt zentriert sich der Spiralbohrer besser und läuft ruhiger, was insbesondere beim Anbohren ohne Vorbohrung und beim Bohren relativ harter Materialien vorteilhaft ist.

In einer weiteren Ausführungsform liegen je Steg die Vorlaufnebenschneide und die Nachlaufnebenschneide in Vorschubrichtung des Spiralbohrers in Richtung der Bohrerspitze axial auf gleicher Höhe.

Durch diese Ausgestaltung wird erreicht, dass die Vorlaufnebenschneide und die Nachlaufnebenschneide bei einem Bohrvorgang gleichzeitig mit der Bearbeitung des Werkstückmaterials beginnen. Dadurch wird die Schnittkraft gleichmäßig auf beide Nebenschneiden verteilt, wodurch die Standzeit des Spiralbohrers erhöht werden kann. Insgesamt kann die Zentrierung des Spiralbohrers vereinfacht und ein gleichmäßigerer Lauf des Spiralbohrers gefördert werden, wodurch schließlich die Oberflächengüte des Bohrlochs verbessert werden kann. Dass die Vorlaufnebenschneide und die Nachlaufnebenschneide in Vorschubrichtung des Spiralbohrers in Richtung der Bohrerspitze axial auf gleicher Höhe liegen, kann beispielsweise durch eine Korrektur oder Verrundung der Schneidenecke im Bereich der Vorlaufnebenschneide erreicht werden. Insbesondere kann die Schneidenecke, die den Übergang von der Hauptschneide zur Vorlaufnebenschneide bildet, im Bereich der Vorlaufnebenschneide beispielsweise um 10° angeschliffen werden (Gratarmanschliff), so dass die Länge der Vorlaufnebenschneide verkürzt wird und die Vorlaufnebenschneide und die Nachlaufnebenschneide in Vorschubrichtung des Spiralbohrers in Richtung der Bohrerspitze axial auf gleicher Höhe liegen.

Eine radiale Tiefe der Nebenspannuten kann 25 % bis 30 % der radialen Tiefe der Hauptspannuten betragen.

Die an die Nachlaufnebenschneide angrenzende Nebenspannut führt von der Nachlaufnebenschneide abgetragenes Material in Richtung der nachlaufenden Hauptspannut ab, in die die Nebenspannut mündet. Die Nebenlaufschneide dient insbesondere der Nachbearbeitung des von den Hauptschneiden erzeugten Bohrlochs. Im Vergleich zu den Hauptschneiden, die den Hauptteil der Zerspanungsarbeit leisten und deren abgetragene Späne über die Hauptspannuten abgeführt werden, führen die Nachlaufnebenschneiden nur eine Nachbearbeitung der Bohrungswand aus, so dass eine radiale Tiefe der Nebenspannten im Bereich von 25 % bis 30 % der radialen Tiefe der Hauptspannuten ein geeignet großes Volumen zur Spanabfuhr bereitstellen kann, gleichzeitig aber eine gute Stabilität der Stege gewährleistet ist.

Je Steg kann im Sinne einer guten und gleichmäßigen Abstützung der auf die Nebenschneiden bzw. auf den Vor- und Nachlaufsteg wirkenden Schnittkräfte eine quer zur Erstreckungsrichtung gemessene Stegbreite des Nachlaufstegs 70% bis 90% der quer zur Erstreckungsrichtung gemessenen Stegbreite des Vorlaufstegs betragen.

In einer weiteren Ausführungsform bildet jeder Steg eine Hauptschneide, die im Bereich des Bohrerkerns einen kleineren Spitzenwinkel aufweist als außerhalb des Bohrerkerns.

Der kleinere Spitzenwinkel im Bereich des Bohrerkerns erleichtert die Zentrierung des Spiralbohrers. Insbesondere kann der Spiralbohrer im Bereich des Bohrerkerns eine Zentrierspitze aufweisen. Dadurch wird ein exaktes, sauberes Anbohren ohne Verlaufen, insbesondere beim Bohren ohne Vorbohrung oder auf glatten Oberflächen, ermöglicht.

Der Verlauf der Hauptschneide kann im Bereich des Bohrerkerns durch eine Ausspitzung korrigiert sein.

Durch die Ausspitzung kann die Hauptschneide in einen im Bereich der Ausspitzung liegenden inneren Hauptschneidenabschnitt, der sich radial nach innen bis zu einer Querschneide erstreckt, und einen radial außerhalb der Ausspitzung liegenden äußeren Hauptschneidenabschnitt, der sich radial nach außen bis zu einer Schneidenecke erstreckt, geteilt sein. Die Ausspitzung kann die Länge der Querschneide verkürzen, wodurch die Zentrierung des Spiralbohrers weiter verbessert wird.

Vorteilhaft kann der Spitzenwinkel im Bereich des Bohrerkerns zwischen 110° und 130° liegen, vorzugsweise 120° betragen.

In einer weiteren Ausführungsform können die Hauptschneiden in einem Bereich außerhalb des Bohrerkerns einen Spitzenwinkel zwischen 170° und 190°, vorzugsweise 180°, aufweisen.

Der Spitzenwinkel muss im Bereich außerhalb des Bohrerkerns bis zu einer Schneidenecke nicht konstant sein, sondern kann je nach zu bohrendem Material geeignet variieren. Beispielsweise kann die Schneidenecke in einem Bereich der Hauptschneide im Sinne einer Stabilisierung so verrundet bzw. angeschliffen sein, dass sich in einem radial äußeren Bereich der Hauptschneide ein Anschnitt ergibt, der einen Spitzenwinkel von 160° aufweist.

Die Vorlaufstege können jeweils eine Führungsfase aufweisen.

Insbesondere schließt die Führungsfase in Umfangsrichtung an die Vorlaufnebenschneide des Vorlaufstegs an. Die Führungsfase des Vorlaufstegs unterstützt die Zentrierung des Spiralbohrers im Bohrloch und sorgt dafür, dass der Spiralbohrer während des Bohrvorgangs exakt axial geführt wird, wodurch geradere und präzisere Bohrlöcher ausgebildet werden können.

Die Nachlaufstege können jeweils eine Führungsfase aufweisen.

Insbesondere schließt die Führungsfase in Umfangsrichtung an die Nachlaufnebenschneide des Nachlaufstegs an. Die Führungsfase des Nachlaufstegs unterstützt die Zentrierung des Spiralbohrers im Bohrloch und sorgt dafür, dass der Spiralbohrer während des Bohrvorgangs exakt axial geführt wird, wodurch geradere und präzisere Bohrlöcher ausgebildet werden können.

Der Spiralbohrer kann wenigstens einen Kühlschmiermittelkanal zur Zuführung von Kühlschmiermittel in den Bereich einer Hauptschneide aufweisen. Vorteilhaft mündet der wenigstens einen Kühlschmiermittelkanal in einer Freifläche des Schneidkeils der Hauptschneide.

Die Schneidkanten der Hauptschneiden können je nach zu bearbeitendem Material verrundet sein.

Weitere Einzelheiten, Merkmale und Vorteile ergeben sich aus der nachfolgenden Beschreibung von einer Ausführungsform anhand der Zeichnungen. Es zeigen:
Fig. 1 einen Abschnitt eines Schneidteils eines Spiralbohrers gemäß einer Ausführungsform in einer Seitenansicht;
Fig. 2 den Schneidteil gemäß Fig. 1 in einer Seitenansicht;
Fig. 3 eine Vorderansicht des Spiralbohrers aus Fig. 1; und
Fig. 4 eine senkrecht zur Längsmittelachse geschnittene Ansicht des Spiralbohrers aus Fig. 1.

### Ausführungsform

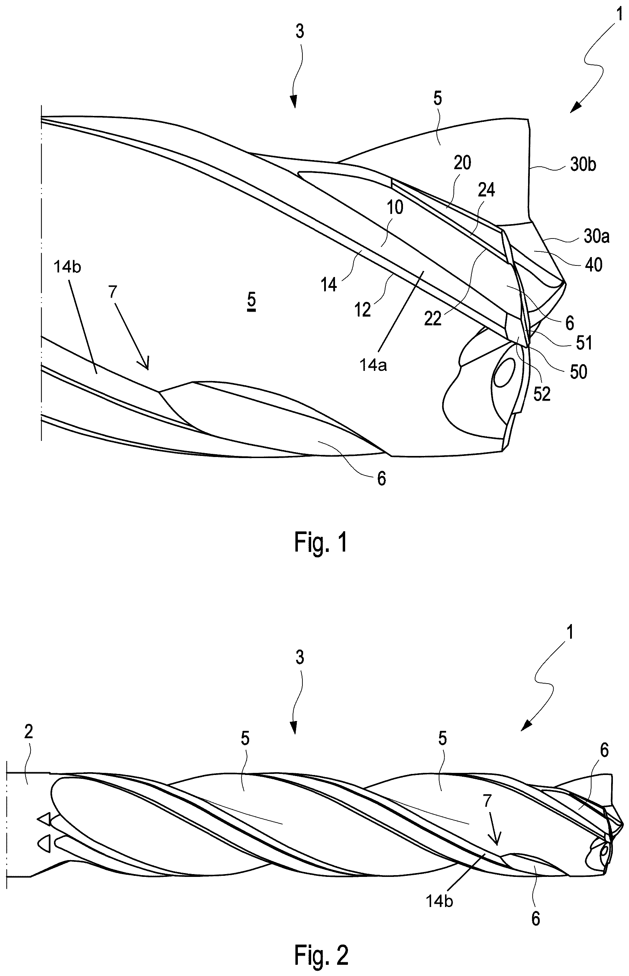

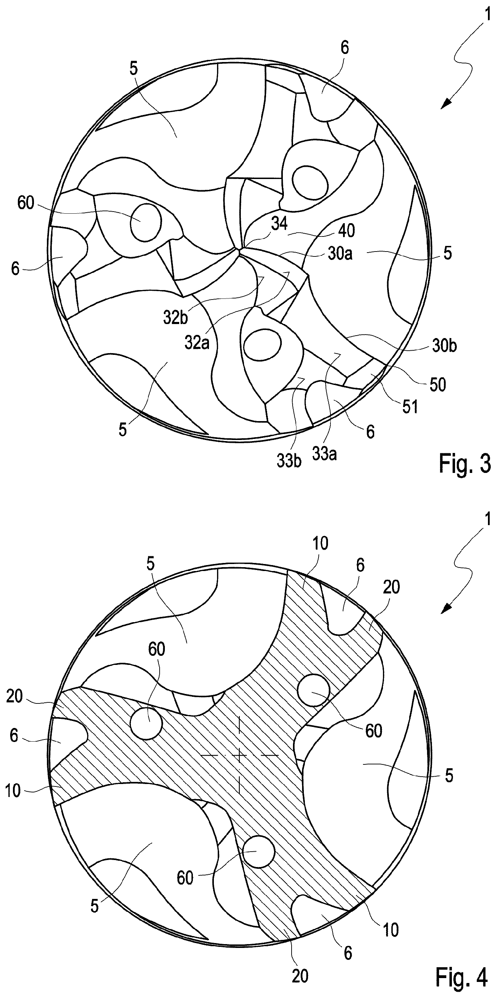

In den Figuren 1 bis 4 ist mit dem Bezugszeichen 1 ein rechtsdrehender, d.h. der Spiralbohrer dreht sich in einer Vorderansicht (Fig. 3) gegen den Uhrzeigersinn, dreischneidiger Spiralbohrer einer Ausführungsform bezeichnet, der einen sich entlang einer Längsmittelachse erstreckenden, in Fig. 2 angedeuteten Schaft 2 zum Einspannen in ein Werkzeugfutter sowie einen in den Figuren 1 und 2 jeweils in einer Seitenansicht dargestellten Schneidteil 3 aufweist.

Wie in Fig. 3 und 4 gezeigt, weist der Schneidteil 3 drei Stege auf, die in Umfangsrichtung des Spiralbohrers 1 durch wendelförmig verlaufende Hauptspannuten 5 voneinander getrennt sind und jeweils in Umfangsrichtung des Spiralbohrers 1 durch eine entlang des Stegs verlaufende Nebenspannut 6 in einen Vorlaufsteg 10 und einen Nachlaufsteg 20 geteilt sind, die jeweils eine Nebenschneide aufweisen. Insbesondere weist der Vorlaufsteg 10 eine Vorlaufnebenschneide 12 und der Nachlaufsteg 20 eine Nachlaufnebenschneide 22 auf, die auf demselben Durchmesser liegen. In Umfangsrichtung des Spiralbohrers 1 schließt an die Vorlaufnebenschneide 12 ein Führungsfase 14 und eine Freifläche 14a und an die Nachlaufnebenschneide 22 eine Führungsfase 24 und eine Freifläche an. Je Steg endet der Nachlaufsteg 20 in Richtung des Schafts 2 vor dem Vorlaufsteg 10. Des Weiteren mündet die Nebenspannut 6 in einer nachlaufenden Hauptspannut 5. Folglich erstreckt sich die Hauptspannut 5 in einem axial hinter dem Nachlaufsteg 20 liegenden Bereich 7, d.h. axial hinter dem Auslauf der Nebenspannut 6, in Umfangsrichtung des Spiralbohrers 1 bis zu einem Rücken 14b des vorauslaufenden Vorlaufstegs 10, wie in Fig. 1 und 2 gezeigt.

Durch diese Ausgestaltung wird im Vergleich zu einem Spiralbohrer, bei dem sich der Nachlaufsteg wie der Vorlaufsteg über die gesamte axiale Länge des Schneidteils bis zum Schaft erstreckt, erreicht, dass die am Nachlaufsteg 20 ausgebildete Nachlaufnebenschneide 22 in Richtung ihrer Erstreckung kürzer ist. Die Bildung relativ langer Fließspäne oder Wickelspäne, die den Bohrvorgang behindern oder mit der Bohrungswand verklemmen können, durch die Nachlaufnebenschneide 22 kann dadurch verhindert werden. Späne, die von der Nachlaufnebenschneide 22 von der Bohrungswand abgetragen werden, können über die in die nachlaufende Hauptspannut 5 mündende Nebenspannut 6 in die nachlaufende Hauptspannut überführt 5 und über die nachlaufende Hauptspannut 5 schließlich sicher und zuverlässig in Richtung des Schafts 2 abtransportiert werden.

Jeder Steg bildet an seinem in Werkzeugvorschubrichtung vorderen Ende, das in Fig. 1 rechts dargestellt ist, eine Hauptschneide aus, deren Verlauf im Bereich des Bohrerkerns durch eine Ausspitzung 40 korrigiert ist. Durch die Ausspitzung 40 ist die Hauptschneide in einen im Bereich der Ausspitzung 40 liegenden inneren Hauptschneidenabschnitt 30a, der sich radial nach innen bis zu einer Querschneide 34 erstreckt, und einen radial außerhalb der Ausspitzung 40 liegenden äußeren Hauptschneidenabschnitt 30b geteilt. Wie des Weiteren aus der Fig. 1 hervorgeht, weist der Spiralbohrer 1 im Bereich der Ausspitzung 40 bzw. dem inneren Hauptschneidenabschnitt 30a eine Zentrierspitze mit einem Spitzenwinkel von 120° auf. Der Spitzenwinkel im Bereich des äußeren Hauptschneidenabschnitts 30b beträgt in der gezeigten Ausführungsform 180°.

Der innere Hauptschneidenabschnitt 30a ist durch eine durch die Ausspitzung 40 entstandene Spanfläche und eine innere erste Freifläche 32a definiert, die einen ersten Freiwinkel aufweist. Entgegen der Drehrichtung des Spiralbohrers 1 schließt eine innere zweite Freifläche 32b an die innere erste Freifläche 32a an, deren zweiter Freiwinkel größer als der erste Freiwinkel der ersten Freifläche 32a ist.

Der äußere Hauptschneidenabschnitt 30b ist durch eine Spanfläche der Hauptspannut 5 und eine äußere erste Freifläche 33a definiert, die einen ersten Freiwinkel aufweist. Entgegen der Drehrichtung des Spiralbohrers 1 schließt eine äußere zweite Freifläche 33b an die äußere erste Freifläche 33a an, deren zweiter Freiwinkel größer als der erste Freiwinkel der ersten Freifläche 33a ist. Die Hauptschneide bzw. der äußere Hauptschneidenabschnitt 30b verläuft radial nach außen bis zu einer Schneidenecke 50, an der die Hauptschneide in die Vorlaufnebenschneide 12 des Vorlaufstegs 10 übergeht. Wie in der Vorderansicht von Fig. 3 dargestellt ist, verläuft der äußere Hauptschneidenabschnitt 30b von der Ausspitzung 40 bis zur Schneidenecke 50 sichelförmig.

In der gezeigten Ausführungsform ist die Schneidenecke 50 durch Anschliffe verrundet und weist im Bereich der Hauptschneide einen ersten Anschliff 51 (vgl. Fig. 3) und im Bereich der Vorlaufnebenschneide 12 einen zweiten Anschliff 52 (vgl. Fig. 1) auf. Durch den ersten Anschliff 51 beträgt der Spitzenwinkel der Hauptschneide in diesem Bereich in der gezeigten Ausführungsform 160°. Durch den zweiten Anschliff 52, der als Gratarmanschliff bezeichnet werden kann und in der gezeigten Ausführungsform 10° beträgt, wird erreicht, dass die Vorlaufnebenschneide 12 und die Nachlaufnebenschneide 22 in Vorschubrichtung des Spiralbohrers 1 in Richtung der Bohrerspitze axial auf gleicher Höhe liegen, wie in Fig. 1 gezeigt.

In den Figuren 3 und 4 sind innerhalb der Stege verlaufende Kühlschmiermittelkanäle 60 dargestellt, die zum Zuführen von Kühlschmiermittel an die Hauptschneiden dienen. Die Mündungsöffnungen der Kühlschmiermittelkanäle 60 liegen jeweils im Bereich der inneren zweiten Freifläche 32b und äußeren zweiten Freifläche 33b.

In der gezeigten Ausführungsform haben die die Vorlaufnebenschneiden 12 und die Nachlaufnebenschneiden 22 jeweils einen positiven Rückspanwinkel und verlaufen parallel zueinander. Des Weiteren liegt je Steg die Länge der Nachlaufnebenschneide 22 im Bereich von 5 % bis 10 % der Länge der Vorlaufnebenschneide 12.

### Alternative Ausführungsformen

In der gezeigten Ausführungsform weisen die Vorlaufnebenschneide und die Nachlaufnebenschneide jedes Stegs jeweils einen positiven Rückspanwinkel auf. Der Rückspanwinkel der Nebenschneiden kann je nach zu bearbeitendem Material, Anforderungen an die zu erzielende Oberflächengüte und gewünschter Stabilität der Nebenschneiden jedoch auch 0° oder negativ sein.

In der gezeigten Ausführungsform sind die Schneidenecken durch den ersten Anschliff im Bereich der Vorlaufnebenschneide und den zweiten Anschliff im Bereich des äußeren Hauptschneidenabschnitts im Sinne einer Stabiliesierung verrundet. Je nach zu bearbeitendem Material können die Schneidenecken nur den ersten den ersten Anschliff im Bereich der Vorlaufnebenschneide, nur den zweiten Anschliff im Bereich des äußeren Hauptschneidenabschnitts oder gar keinen Anschliff aufweisen.

### Bezugszeichenliste

- 1: Spiralbohrer
- 2: Schaft
- 3: Schneidteil
- 5: Hauptspannut
- 6: Nebenspannut
- 7: Bereich
- 10: Vorlaufsteg
- 12: Vorlaufnebenschneide
- 14: Führungsfase
- 14a: Freifläche
- 14b: Rücken
- 20: Nachlaufsteg
- 22: Nachlaufnebenschneide
- 24: Führungsfase
- 30a: innerer Hauptschneidenabschnitt
- 30b: äußerer Hauptschneidenabschnitt
- 32a: innere erste Freifläche
- 32b: innere zweite Freifläche
- 33a: äußere erste Freifläche
- 33b: äußere zweite Freifläche
- 40: Ausspitzung
- 50: Schneidenecke
- 51: erster Anschliff
- 52: zweiter Anschliff
- 60: Kühlschmiermittelkanal

## Patentansprüche

1. Spiralbohrer (1) mit einem Schaft (2) und einem Schneidteil (3), der wenigstens zwei Stege aufweist, die in Umfangsrichtung des Spiralbohrers (1) durch Hauptspannuten (5) voneinander getrennt sind und jeweils in Umfangsrichtung des Spiralbohrers (1) durch eine entlang des Stegs verlaufende Nebenspannut (6) in einen Vorlaufsteg (10) und einen Nachlaufsteg (20) geteilt sind, die jeweils eine Nebenschneide (12, 22) aufweisen, **dadurch gekennzeichnet, dass** je Steg der Nachlaufsteg (20) in Richtung des Schafts (2) vor dem Vorlaufsteg (10) endet und die Nebenspannut (6) in eine nachlaufende Hauptspannut (5) mündet.

2. Spiralbohrer (1) nach Anspruch 1, **dadurch gekennzeichnet, dass** die Nebenschneiden (12, 22) jeweils einen positiven Rückspanwinkel, vorzugsweise einen positiven Rückspanwinkel von mind. 15°, aufweisen.

3. Spiralbohrer (1) nach Anspruch 1 oder 2, **dadurch gekennzeichnet, dass** je Steg die Länge der Nachlaufnebenschneide (22) 5 % bis 10 % der Länge der Vorlaufnebenschneide (12) beträgt.

4. Spiralbohrer (1) nach einem der vorhergehenden Ansprüche, **dadurch gekennzeichnet, dass** je Steg die Vorlaufnebenschneide (12) und die Nachlaufnebenschneide (22) parallel zueinander verlaufen.

5. Spiralbohrer (1) nach einem der vorhergehenden Ansprüche, **dadurch gekennzeichnet, dass** je Steg die Vorlaufnebenschneide (12) und die Nachlaufnebenschneide (22) auf demselben Durchmesser liegen.

6. Spiralbohrer (1) nach einem der vorhergehenden Ansprüche, **dadurch gekennzeichnet, dass** je Steg die Vorlaufnebenschneide (12) und die Nachlaufnebenschneide (22) in Vorschubrichtung des Spiralbohrers (1) in Richtung der Bohrerspitze axial auf gleicher Höhe liegen.

7. Spiralbohrer (1) nach einem der vorhergehenden Ansprüche, **dadurch gekennzeichnet, dass** eine radiale Tiefe der Nebenspannuten (6) 25 % bis 30 % der radialen Tiefe der Hauptspannuten (5) beträgt.

8. Spiralbohrer (1) nach einem der vorhergehenden Ansprüche, **dadurch gekennzeichnet, dass** jeder Steg eine Hauptschneide bildet, die im Bereich des Bohrerkerns einen kleineren Spitzenwinkel aufweist als außerhalb des Bohrerkerns.

9. Spiralbohrer (1) nach Anspruch 8, **dadurch gekennzeichnet, dass** der Verlauf der Hauptschneide im Bereich des Bohrerkerns durch eine Ausspitzung (40) korrigiert ist.

10. Spiralbohrer (1) nach Anspruch 8 oder 9, **dadurch gekennzeichnet, dass** der Spitzenwinkel im Bereich des Bohrerkerns zwischen 110° und 130° liegt, vorzugsweise 120° beträgt.

11. Spiralbohrer (1) nach einem der Ansprüche 8 bis 10, **dadurch gekennzeichnet, dass** die Hauptschneiden in einem Bereich außerhalb des Bohrerkerns einen Spitzenwinkel zwischen 170° und 190°, vorzugsweise 180°, aufweisen.

12. Spiralbohrer (1) nach einem der vorhergehenden Ansprüche, **dadurch gekennzeichnet, dass** die Vorlaufstege (10) jeweils eine Führungsfase (14) aufweisen.

13. Spiralbohrer (1) nach einem der vorhergehenden Ansprüche, **dadurch gekennzeichnet, dass** die Nachlaufstege (20) jeweils eine Führungsfase (24) aufweisen.
